# EUROPEAN PATENT APPLICATION

(11) **EP 4 568 312 A1**
(43) Date of publication of application: **11.06.2025**
(21) Application number: 23859209.1
(22) Date of filing: 22.08.2023
(51) Int. Cl.: H04W 12/08, H04L 5/00, H04W 24/02, H04W 8/24, H04W 76/27, H04W 12/10

(54) **COMMUNICATION METHOD AND COMMUNICATION APPARATUS**

(30) Priority: 30.08.2022 CN 202211048899
(71) Applicant: Huawei Technologies Co., Ltd., Shenzhen, Guangdong 518129 (CN)
(72) Inventor: ZHU, Jinshun, Shenzhen, Guangdong 518129 (CN); WANG, Bo, Shenzhen, Guangdong 518129 (CN)
(74) Representative: Pfenning, Meinig & Partner mbB
(86) International application number: PCT/CN2023/114327
(87) International publication number: WO 2024/046176

(57) **Abstract**

This application provides a communication method and a communication apparatus. A parallel transmission mechanism is used in an idle state access process and an inactive state access process, to help reduce an access delay in the idle state access process and an access delay in the inactive state access process, and improve communication efficiency. In the idle state access process, if a UE capability query process is included, an access network device may transmit, to a terminal device, any two of the following in a parallel transmission manner: a security mode command message, a UE capability query message, and an RRC reconfiguration message. In the inactive state access process, the access network device may transmit, to the terminal device, a contention resolution message and an RRC resume message in the parallel transmission manner. The parallel transmission manner means that a message is transmitted while another message can be transmitted without waiting for a feedback message of the message.

## Description

This application claims priority to Chinese Patent Application No. 202211048899.5, filed with the China National Intellectual Property Administration on August 30, 2022 and entitled "COMMUNICATION METHOD AND COMMUNICATION APPARATUS", which is incorporated herein by reference in its entirety.

### TECHNICAL FIELD

This application relates to the field of wireless communication, and in particular, to a communication method and a communication apparatus.

### BACKGROUND

5th generation mobile communication technology (5th generation mobile communication technology, 5G) standalone (standalone, SA) networking is applicable to three application scenarios: enhanced mobile broadband (enhanced mobile broadband, eMMB), ultra-reliable and low-latency communication (ultra-reliable and low-latency communication, URLLC), and massive machine type of communication (massive machine type of communication, mMTC), and can provide, for users, various 5G applications such as virtual reality (virtual reality, VR) and augmented reality (augmented reality, AR).

The SA networking can support idle (idle) state access and inactive (inactive) state access, to implement communication between a terminal device and a network device.

However, in the SA networking, an access delay is long in both the idle state access and the inactive state access.

### SUMMARY

This application provides a communication method and a communication apparatus, to reduce an access delay and improve communication efficiency.

According to a first aspect, a communication method is provided. The method includes: An access network device sends a first configuration message to a terminal device, where the first configuration message is used to configure a security algorithm for the terminal device; the access network device sends a second configuration message to the terminal device, where the second configuration message is used for radio resource control (radio resource control, RRC) reconfiguration, and the first configuration message and the second configuration message are sent in parallel; the access network device receives a first configuration complete message from the terminal device, where the first configuration complete message indicates that the security algorithm has been configured; and the access network device receives a second configuration complete message from the terminal device, where the second configuration complete message indicates that RRC reconfiguration is completed.

If the communication method provided in this application is applied to a 5G scenario, the access network device may be a gNodeB (gNodeB), and the terminal device may be user equipment (user equipment, UE). However, this application is not limited thereto.

The first configuration message may be a security mode command message in a specific embodiment, and the second configuration message may be an RRC reconfiguration message. That the first configuration message and the second configuration message are sent in parallel means that the second configuration message is transmitted immediately after the first configuration message is transmitted, and there is no need to wait for a feedback message of the first configuration message.

It may be understood that, if the terminal device fails to configure the security algorithm based on the first configuration message, the access network device may receive a configuration failure message from the terminal device or receives no first configuration complete message; and if the terminal device fails to perform RRC reconfiguration based on the second configuration message, the access network device may receive an RRC reconfiguration failure message from the terminal device or receives no second configuration complete message. In the foregoing cases, the access network device may send the first configuration message and the second configuration message to the terminal device again. If the access network device receives the configuration failure message and the second configuration complete message from the terminal device, the access network device may send the first configuration message to the terminal device. If the access network device receives the first configuration complete message and the RRC reconfiguration failure message from the terminal device, the access network device may send the second configuration message to the terminal device.

That the access network device may receive the first configuration complete message and the second configuration complete message in parallel means that the access network device may receive the second configuration complete message after receiving the first configuration complete message, or may receive the first configuration complete message after receiving the second configuration complete message. This is not limited in this application.

According to the communication method provided in this application, after sending the first configuration message to the terminal device, the access network device may immediately send the second configuration message to the terminal device, and may send the second configuration message without waiting to receive the first configuration complete message. This helps reduce a delay of waiting for receiving the first configuration complete message, reduces an access delay, and improves communication efficiency.

With reference to the first aspect, in some implementations of the first aspect, the first configuration message and the second configuration message occupy a same time-frequency resource.

That the first configuration message and the second configuration message occupy the same time-frequency resource may mean that the first configuration message and the second configuration message occupy a same slot or a same symbol. This is not limited in this application.

That the first configuration message and the second configuration message occupy the same time-frequency resource may also be referred to as combined sending of the first configuration message and the second configuration message. This is not limited in embodiments of this application.

According to the communication method provided in this application, the first configuration message and the second configuration message occupy the same time-frequency resource, so that time-frequency resource overheads can be reduced.

With reference to the first aspect, in some implementations of the first aspect, the first configuration complete message and the second configuration complete message occupy a same time-frequency resource.

That the first configuration complete message and the second configuration complete message occupy the same time-frequency resource may also be referred to as combined receiving of the first configuration complete message and the second configuration complete message by the access network device. This is not limited in this application.

According to the communication method provided in this application, the first configuration complete message and the second configuration complete message occupy the same time-frequency resource, so that time-frequency resource overheads can be reduced.

With reference to the first aspect, in some implementations of the first aspect, before the access network device sends the second configuration message to the terminal device, the method further includes: The access network device sends a query message to the terminal device, where the query message is used to query a capability of the terminal device, and the first configuration message, the query message, and the second configuration message are sent in parallel.

In the foregoing access process, the access network device may further send the query message to the terminal device. The query message may be a UECapabilityEnquiry message in a specific embodiment. However, this application is not limited thereto.

That the first configuration message, the query message, and the second configuration message are sent in parallel means that the query message is transmitted immediately after the first configuration message is transmitted without waiting for a feedback message of the first configuration message, and the second configuration message is transmitted immediately after the query message is transmitted without waiting for a feedback message of the query message.

According to the communication method provided in this application, the first configuration message, the query message, and the second configuration message are all sent in parallel. This helps reduce a delay of waiting for receiving the first configuration complete message and a delay of waiting for receiving the feedback message of the query message, further reduces an access delay, and improves communication efficiency.

With reference to the first aspect, in some implementations of the first aspect, before the access network device receives the second configuration complete message from the terminal device, the method further includes: The access network device receives capability information from the terminal device, where the capability information includes the capability of the terminal device.

The capability information may be sent by the terminal device to the access network device based on the query message. The capability information may be UECapabilityInformation in a specific embodiment. However, this application is not limited thereto.

That the access network device may receive the first configuration complete message, the second configuration complete message, and the capability information in parallel also means that the access network device may receive the second configuration complete message after receiving the first configuration complete message, or may receive the first configuration complete message after receiving the second configuration complete message. This is not limited in this application.

It may be understood that if the access network device receives the first configuration complete message, the second configuration complete message, and the capability information in parallel, a delay can be further reduced, and communication efficiency can be improved.

With reference to the first aspect, in some implementations of the first aspect, the first configuration message and the query message occupy a same time-frequency resource.

That the first configuration message and the query message occupy the same time-frequency resource may mean that the first configuration message and the query message occupy a same slot or a same symbol. This is not limited in this application.

With reference to the first aspect, in some implementations of the first aspect, the first configuration complete message and the capability information occupy a same time-frequency resource.

That the first configuration message and the capability information occupy the same time-frequency resource may also be referred to as combined sending of the first configuration message and the capability information. This is not limited in embodiments of this application.

According to the communication method provided in this application, the first configuration message and the capability information occupy the same time-frequency resource, so that time-frequency resource overheads can be reduced.

According to a second aspect, a communication method is provided, including: An access network device sends a first configuration message to a terminal device, where the first configuration message is used to configure a security algorithm for the terminal device; the access network device sends a query message to the terminal device, where the query message is used to query a capability of the terminal device, and the first configuration message and the query message are sent in parallel; the access network device receives a first configuration complete message from the terminal device, where the first configuration complete message indicates that the security algorithm has been configured; and the access network device receives capability information from the terminal device, where the capability information includes the capability of the terminal device.

If the communication method provided in this application is applied to a 5G scenario, the access network device may be a gNodeB, and the terminal device may be UE. However, this application is not limited thereto.

The first configuration message may be a security mode command message in a specific embodiment, and the query message may be a UECapabilityEnquiry message in a specific embodiment. However, this application is not limited thereto.

That the first configuration message and the query message are sent in parallel means that the query message is transmitted immediately after the first configuration message is transmitted, and there is no need to wait for a feedback message of the first configuration message.

It may be understood that, if the terminal device fails to configure the security algorithm based on the first configuration message, the access network device may receive a configuration failure message from the terminal device or receives no first configuration complete message; and if the terminal device does not feed back a message based on the query message, the access network device receives no capability information. In the foregoing cases, the access network device may send the first configuration message and the query message to the terminal device again. If the access network device receives the configuration failure message and the capability information from the terminal device, the access network device may send the first configuration message to the terminal device. If the access network device receives the first configuration complete message from the terminal device and receives no capability information, the access network device may send the query information to the terminal device.

That the access network device may receive the first configuration complete message and the capability information in parallel means that the access network device may receive the capability information after receiving the first configuration complete message, or may receive the first configuration complete message after receiving the capability information. This is not limited in this application.

According to the communication method provided in this application, after sending the first configuration message to the terminal device, the access network device may immediately send the query message to the terminal device, and may send the query message without waiting to receive the first configuration complete message. This helps reduce a delay of waiting for receiving the first configuration complete message, reduces an access delay, and improves communication efficiency.

With reference to the second aspect, in some implementations of the second aspect, the method further includes: The access network device sends a second configuration message to the terminal device, where the second configuration message is used for radio resource control RRC reconfiguration; and the access network device receives a second configuration complete message from the terminal device, where the second configuration complete message indicates that RRC reconfiguration is completed.

In the foregoing access process, the access network device may further send the second configuration message to the terminal device. The second configuration message may be an RRC reconfiguration message in a specific embodiment. However, this application is not limited thereto.

If the terminal device implements RRC reconfiguration based on the second configuration message, the access network device receives the second configuration complete message from the terminal device, to implement an initial context setup procedure.

According to the communication method provided in this application, the access network device enables, using the second configuration message, the terminal device to implement RRC reconfiguration, to implement the initial context setup procedure. This helps complete an access process.

With reference to the second aspect, in some implementations of the second aspect, the first configuration message and the query message occupy a same time-frequency resource.

With reference to the second aspect, in some implementations of the second aspect, the first configuration complete message and the capability information occupy a same time-frequency resource.

According to a third aspect, a communication method is provided. The method includes: An access network device sends a first message to a terminal device, where the first message includes a contention resolution message; the access network device sends a second message to the terminal device, where the second message includes a radio resource control RRC configuration message, the first message and the second message are sent in parallel, and the RRC configuration message is an RRC resume message or an RRC setup message; the access network device receives a first feedback message from the terminal device, where the first feedback message indicates that the terminal device has received the first message; and the access network device receives a second feedback message from the terminal device, where the second feedback message indicates that the terminal device has received the second message.

If the communication method provided in this application is applied to a 5G scenario, the access network device may be a gNodeB, and the terminal device may be UE. However, this application is not limited thereto.

The RRC configuration message may be the RRC setup message, the RRC resume message, or another message. This is not limited in embodiments of this application.

The first message may be a message 4 (message 4, Msg4) in a specific embodiment, and the Msg4 may include the contention resolution message. The contention resolution message may be a contention resolution medium access control protocol control element (medium access control control element, MAC CE) message. The second message may be an RRC setup message (RRCSetupRequest) or an RRC resume (RRCResume) message in a specific embodiment. However, this application is not limited thereto. That the first message and the second message are sent in parallel means that the second message is transmitted immediately after the first message is transmitted, and there is no need to wait for a feedback message of the first message.

It may be understood that, if the feedback message received by the access network device indicates that the terminal device receives no first message and second message, the access network device may send the first message and the second message to the terminal device again. If the feedback message received by the access network device indicates that the terminal device receives the second message but receives no first message, the access network device may send the first message to the terminal device. If the feedback message received by the access network device indicates that the terminal device receives the first message but receives no second message, the access network device may send the second message to the terminal device.

That the access network device may receive the first feedback message and the second feedback message in parallel means that the access network device may receive the second feedback message after receiving the first feedback message, or may receive the first feedback message after receiving the second feedback message. This is not limited in this application.

According to the communication method provided in this application, after sending the first configuration message to the terminal device, the access network device may immediately send the second configuration message to the terminal device, and may send the second configuration message without waiting to receive the first feedback message. This helps reduce a delay of waiting for receiving the first feedback message, reduces an access delay, and improves communication efficiency.

With reference to the third aspect, in some implementations of the third aspect, the first feedback message and the second feedback message occupy a same time-frequency resource.

That the first feedback message and the second feedback message occupy the same time-frequency resource may mean that the first feedback message and the second feedback message occupy a same slot or a same symbol. This is not limited in this application.

That the first feedback message and the second feedback message occupy the same time-frequency resource may also be referred to as combined sending of the first feedback message and the second feedback message. This is not limited in embodiments of this application.

According to the communication method provided in this application, the first feedback message and the second feedback message occupy the same time-frequency resource, so that time-frequency resource overheads can be reduced.

With reference to the third aspect, in some implementations of the third aspect, the first message and the second message occupy a same time-frequency resource.

That the first message and the second message occupy the same time-frequency resource may also be referred to as combined receiving of the first message and the second message by the access network device. This is not limited in this application.

According to the communication method provided in this application, the first message and the second message occupy the same time-frequency resource, so that time-frequency resource overheads can be reduced.

With reference to the third aspect, in some implementations of the third aspect, the second message is transmitted in fragments, the second message includes M blocks of data, the M blocks of data are obtained by fragmenting the second message, N blocks of data in the M blocks of data and a first message occupy a same time-frequency resource, M is greater than N, M is an integer greater than 1, and N is an integer greater than or equal to 1.

If the second message (for example, an RRC resume message) may be transmitted in fragments and is fragmented into the M blocks of data, a part of data in the second message, that is, the N blocks of data in the M blocks of data, and the first message may occupy the same time-frequency resource, and remaining data in the second message may occupy a same time-frequency resource, or may occupy different time-frequency resources. This is not limited in embodiments of this application.

According to the communication method provided in this application, the N blocks of data in the M blocks of data and the first message occupy the same time-frequency resource. Compared with a case in which the M blocks of data separately occupy different time-frequency resources, this method can reduce time-frequency resource overheads.

According to a fourth aspect, a communication method is provided, including: A terminal device receives a first configuration message from an access network device, where the first configuration message is used to configure a security algorithm for the terminal device; the terminal device receives a second configuration message from the access network device, where the second configuration message is used for radio resource control RRC reconfiguration, and the first configuration message and the second configuration message are received in parallel; the terminal device configured the security algorithm based on the first configuration message, and sends a first configuration complete message to the access network device after configuring the security algorithm, where the first configuration complete message indicates that the security algorithm has been configured; and the terminal device performs RRC reconfiguration based on the second configuration message, and sends a second configuration complete message to the access network device after completing RRC reconfiguration, where the second configuration complete message indicates that RRC reconfiguration is completed.

With reference to the fourth aspect, in some implementations of the fourth aspect, the first configuration message and the second configuration message occupy a same time-frequency resource.

With reference to the fourth aspect, in some implementations of the fourth aspect, the first configuration complete message and the second configuration complete message occupy a same time-frequency resource.

With reference to the fourth aspect, in some implementations of the fourth aspect, before the terminal device receives the second configuration message from the access network device, the method further includes: The terminal device receives a query message from the access network device, where the query message is used to query a capability of the terminal device, and the first configuration message, the query message, and the second configuration message are received in parallel.

With reference to the fourth aspect, in some implementations of the fourth aspect, the method further includes: The terminal device sends capability information to the access network device based on the query message, where the capability information includes the capability of the terminal device.

With reference to the fourth aspect, in some implementations of the fourth aspect, the first configuration message and the query message occupy a same time-frequency resource.

With reference to the fourth aspect, in some implementations of the fourth aspect, the first configuration complete message and the capability information occupy a same time-frequency resource.

According to a fifth aspect, a communication method is provided, including: A terminal device receives a first configuration message from an access network device, where the first configuration message is used to configure a security algorithm for the terminal device; the terminal device receives a query message from the access network device, where the query message is used to query a capability of the terminal device, and the first configuration message and the query message are received in parallel; the terminal device configures the security algorithm based on the first configuration message, and sends a first configuration complete message to the access network device after configuring the security algorithm, where the first configuration complete message indicates that the security algorithm has been configured; and the terminal device sends capability information to the access network device based on the query message, where the capability information includes the capability of the terminal device.

With reference to the fifth aspect, in some implementations of the fifth aspect, the method further includes: The terminal device receives a second configuration message from the access network device, where the second configuration message is used for radio resource control RRC reconfiguration; and the terminal device performs RRC reconfiguration based on the second configuration message, and sends a second configuration complete message to the access network device after completing RRC reconfiguration, where the second configuration complete message indicates that RRC reconfiguration is completed.

With reference to the fifth aspect, in some implementations of the fifth aspect, the first configuration message and the query message occupy a same time-frequency resource.

With reference to the fifth aspect, in some implementations of the fifth aspect, the first configuration complete message and the capability information occupy a same time-frequency resource.

According to a sixth aspect, a communication method is provided. The method includes: A terminal device receives a first message from an access network device, where the first message includes a contention resolution message; the terminal device receives a second message from the access network device, where the second message includes a radio resource control RRC configuration message, the first message and the second message are received in parallel, and the RRC configuration message is an RRC resume message or an RRC setup message; the terminal device sends a first feedback message to the access network device, where the first feedback message indicates that the terminal device receives no first message or has received the first message; and the terminal device sends a second feedback message to the access network device, where the second feedback message indicates that the terminal device receives no first message or has received the second message.

With reference to the sixth aspect, in some implementations of the sixth aspect, the first feedback message and the second feedback message occupy a same time-frequency resource.

With reference to the sixth aspect, in some implementations of the sixth aspect, the first message and the second message occupy a same time-frequency resource.

With reference to the sixth aspect, in some implementations of the sixth aspect, the second message is transmitted in fragments, the second message includes M blocks of data, the M blocks of data are obtained by fragmenting the second message, N blocks of data in the M blocks of data and the first message occupy a same time-frequency resource, M is greater than N, M is an integer greater than 1, and N is an integer greater than or equal to 1.

According to a seventh aspect, a communication apparatus is provided. The apparatus includes a sending unit and a receiving unit. The sending unit is configured to: send a first configuration message to a terminal device, where the first configuration message is used to configure a security algorithm for the terminal device; and send a second configuration message to the terminal device, where the second configuration message is used for radio resource control RRC reconfiguration, and the first configuration message and the second configuration message are sent in parallel. The receiving unit is configured to: receive a first configuration complete message from the terminal device, where the first configuration complete message indicates that the security algorithm has been configured; and receive a second configuration complete message from the terminal device, where the second configuration complete message indicates that RRC reconfiguration is completed.

With reference to the seventh aspect, in some implementations of the seventh aspect, the first configuration message and the second configuration message occupy a same time-frequency resource.

With reference to the seventh aspect, in some implementations of the seventh aspect, the first configuration complete message and the second configuration complete message occupy a same time-frequency resource.

With reference to the seventh aspect, in some implementations of the seventh aspect, the sending unit is further configured to send a query message to the terminal device, where the query message is used to query a capability of the terminal device, and the first configuration message, the query message, and the second configuration message are sent in parallel.

With reference to the seventh aspect, in some implementations of the seventh aspect, the receiving unit is further configured to receive capability information from the terminal device, where the capability information includes the capability of the terminal device.

With reference to the seventh aspect, in some implementations of the seventh aspect, the first configuration message and the query message occupy a same time-frequency resource.

With reference to the seventh aspect, in some implementations of the seventh aspect, the first configuration complete message and the capability information occupy a same time-frequency resource.

According to an eighth aspect, a communication apparatus is provided, including a sending unit and a receiving unit. The sending unit is configured to: send a first configuration message to a terminal device, where the first configuration message is used to configure a security algorithm for the terminal device; and send a query message to the terminal device, where the query message is used to query a capability of the terminal device, and the first configuration message and the query message are sent in parallel. The receiving unit is configured to: receive a first configuration complete message from the terminal device, where the first configuration complete message indicates that the security algorithm has been configured; and receive capability information from the terminal device, where the capability information includes the capability of the terminal device.

With reference to the eighth aspect, in some implementations of the eighth aspect, the sending unit is further configured to send a second configuration message to the terminal device, where the second configuration message is used for radio resource control RRC reconfiguration; and the receiving unit is further configured to receive a second configuration complete message from the terminal device, where the second configuration complete message indicates that RRC reconfiguration is completed.

With reference to the eighth aspect, in some implementations of the eighth aspect, the first configuration message and the query message occupy a same time-frequency resource.

With reference to the eighth aspect, in some implementations of the eighth aspect, the first configuration complete message and the capability information occupy a same time-frequency resource.

According to a ninth aspect, a communication apparatus is provided, including a sending unit and a receiving unit. The sending unit is configured to: send a first message to a terminal device, where the first message includes a contention resolution message; and send a second message to the terminal device, where the second message includes a radio resource control RRC configuration message, the first message and the second message are sent in parallel, and the RRC configuration message is an RRC resume message or an RRC setup message. The receiving unit is configured to: receive a first feedback message from the terminal device, where the first feedback message indicates that the terminal device has received the first message; and receive a second feedback message from the terminal device, where the second feedback message indicates that the terminal device has received the second message.

With reference to the ninth aspect, in some implementations of the ninth aspect, the first feedback message and the second feedback message occupy a same time-frequency resource.

With reference to the ninth aspect, in some implementations of the ninth aspect, the first message and the second message occupy a same time-frequency resource.

With reference to the ninth aspect, in some implementations of the ninth aspect, the second message is transmitted in fragments, the second message includes M blocks of data, the M blocks of data are obtained by fragmenting the second message, N blocks of data in the M blocks of data and the first message occupy a same time-frequency resource, M is greater than N, M is an integer greater than 1, and N is an integer greater than or equal to 1.

According to a tenth aspect, a communication apparatus is provided, including a receiving unit, a sending unit, and a processing unit. The receiving unit is configured to: receive a first configuration message from an access network device, where the first configuration message is used to configure a security algorithm; and receive a second configuration message from the access network device, where the second configuration message is used for radio resource control RRC reconfiguration, and the first configuration message and the second configuration message are received in parallel. The processing unit is configured to configure the security algorithm based on the first configuration message. The sending unit is configured to send a first configuration complete message to the access network device after the security algorithm is configured, where the first configuration complete message indicates that the security algorithm has been configured. The processing unit is further configured to perform RRC reconfiguration based on the second configuration message. The sending unit is further configured to: after RRC reconfiguration is completed, send a second configuration complete message to the access network device, where the second configuration complete message indicates that RRC reconfiguration is completed.

With reference to the tenth aspect, in some implementations of the tenth aspect, the first configuration message and the second configuration message occupy a same time-frequency resource.

With reference to the tenth aspect, in some implementations of the tenth aspect, the first configuration complete message and the second configuration complete message occupy a same time-frequency resource.

With reference to the tenth aspect, in some implementations of the tenth aspect, the receiving unit is further configured to receive a query message from the access network device, where the query message is used to query a capability, and the first configuration message, the query message, and the second configuration message are received in parallel.

With reference to the tenth aspect, in some implementations of the tenth aspect, the sending unit is further configured to send capability information to the access network device based on the query message, where the capability information includes the capability.

With reference to the tenth aspect, in some implementations of the tenth aspect, the first configuration message and the query message occupy a same time-frequency resource.

With reference to the tenth aspect, in some implementations of the tenth aspect, the first configuration complete message and the capability information occupy a same time-frequency resource.

According to an eleventh aspect, a communication apparatus is provided, including a receiving unit, a sending unit, and a processing unit. The receiving unit is configured to: receive a first configuration message from an access network device, where the first configuration message is used to configure a security algorithm; and receive a query message from the access network device, where the query message is used to query a capability, where the first configuration message and the query message are received in parallel. The processing unit is configured to configure the security algorithm based on the first configuration message. The sending unit is configured to: after the security algorithm has been configured, send a first configuration complete message to the access network device, where the first configuration complete message indicates that the security algorithm has been configured; and send capability information to the access network device based on the query message, where the capability information includes the capability.

With reference to the eleventh aspect, in some implementations of the eleventh aspect, the receiving unit is configured to receive a second configuration message from the access network device, where the second configuration message is used for radio resource control RRC reconfiguration; the processing unit is configured to perform RRC reconfiguration based on the second configuration message; the sending unit is configured to: after RRC reconfiguration is completed, send a second configuration complete message to the access network device, where the second configuration complete message indicates that RRC reconfiguration is completed.

With reference to the eleventh aspect, in some implementations of the eleventh aspect, the first configuration message and the query message occupy a same time-frequency resource.

With reference to the eleventh aspect, in some implementations of the eleventh aspect, the first configuration complete message and the capability information occupy a same time-frequency resource.

According to a twelfth aspect, a communication apparatus is provided, including a receiving unit and a sending unit. The receiving unit is configured to: receive a first message from an access network device, where the first message includes a contention resolution message; and receive a second message from the access network device, where the second message includes a radio resource control RRC configuration message, the first message and the second message are received in parallel, and the RRC configuration message is an RRC resume message or an RRC setup message. The sending unit is configured to: send a first feedback message to the access network device, where the first feedback message indicates that the first message is not received or has been received; and send a second feedback message to the access network device, where the second feedback message indicates that the second message is not received or has been received.

With reference to the twelfth aspect, in some implementations of the twelfth aspect, the first feedback message and the second feedback message occupy a same time-frequency resource.

With reference to the twelfth aspect, in some implementations of the twelfth aspect, the first message and the second message occupy a same time-frequency resource.

With reference to the twelfth aspect, in some implementations of the twelfth aspect, the second message is transmitted in fragments, the second message includes M blocks of data, the M blocks of data are obtained by fragmenting the second message, N blocks of data in the M blocks of data and the first message occupy a same time-frequency resource, M is greater than N, M is an integer greater than 1, and N is an integer greater than or equal to 1.

According to a thirteenth aspect, a communication apparatus is provided, including a processor and a memory. The memory is configured to store a computer program, and the processor is configured to: invoke the computer program from the memory, and run the computer program, to enable the apparatus to perform the method in any possible implementation of any one of the foregoing aspects.

Optionally, there are one or more processors, and there are one or more memories.

Optionally, the memory may be integrated with the processor, or the memory and the processor are separately disposed.

Optionally, the communication apparatus further includes a transmitter device (transmitter) and a receiver device (receiver). The transmitter device and the receiver device may be separately disposed, or may be integrated together, and are referred to as a transceiver device (transceiver).

According to a fourteenth aspect, this application provides a processor, including an input circuit, an output circuit, and a processing circuit. The processing circuit is configured to: receive a signal by using the input circuit, and transmit a signal by using the output circuit, to enable the processor to perform the method according to any possible implementation of any one of the foregoing aspects.

In a specific implementation process, the processor may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a fifteenth aspect, a computer-readable storage medium is provided. The computer-readable storage medium stores a computer program (which may also be referred to as code or instructions), and when the computer program is run on a computer, the computer is enabled to perform the method in any possible implementation of any one of the foregoing aspects.

According to a sixteenth aspect, a computer program product is provided. The computer program product includes a computer program (which may also be referred to as code or instructions), and when the computer program is run, a computer is enabled to perform the method in any possible implementation of any one of the foregoing aspects.

### BRIEF DESCRIPTION OF DRAWINGS

FIG. 1 is a schematic flowchart of an idle state access mode;
FIG. 2 is a schematic flowchart of an inactive state access mode;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a diagram of time sequence comparison according to an embodiment of this application;
FIG. 7 is diagram of other time sequence comparison according to an embodiment of this application;
FIG. 8 is a schematic block diagram of a communication apparatus according to an embodiment of this application; and
FIG. 9 is a schematic block diagram of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a 6th generation (6th generation, 6G) mobile communication system, a worldwide interoperability for microwave access (worldwide interoperability for microwave access, WiMAX) communication system, and another evolved communication system. The 5G system usually includes the following three major application scenarios: enhanced mobile broadband (enhanced mobile broadband, eMBB), ultra-reliable and low-latency communication (ultra-reliable and low-latency communication, URLLC), and massive machine type of communication (massive machine type of communication, mMTC), and also includes various future communication systems.

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, the terminal may be, for example, a vehicle, a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, an uncrewed aerial vehicle, a terminal device in a 5G network, a terminal device in a future evolved public land mobile network (public land mobile network, PLMN), and the like. This is not limited in embodiments of this application.

In addition, in embodiments of this application, the terminal device may alternatively be a terminal device in an internet of things (internet of things, IoT) system. An IoT is an important part of future development of information technologies, and a main technical feature of the IoT is to connect things to a network by using a communication technology, to implement an intelligent network for interconnection between a person and a machine or between things.

A main function of an access network device in embodiments of this application is to control the terminal device to wirelessly access a mobile communication network. The access network device is a part of a mobile communication system, and implements a wireless access technology. For example, the access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (6th generation, 6G) mobile communication system, a base station in a future mobile communication system, or an access node in a Wi-Fi system, or may be a module or a unit that completes some functions of a base station, for example, a central unit (central unit, CU) or a distributed unit (distributed unit, DU). A radio access network device may be a macro base station, may be a micro base station or an indoor base station, or may be a relay node, a donor node, or the like. It may be understood that, all or some functions of the radio access network device in this application may alternatively be implemented using a software function running on hardware, or may be implemented using a virtualization function instantiated on a platform (for example, a cloud platform). A specific technology and a specific device form used by the access network device are not limited in embodiments of this application.

A core network device in embodiments of this application mainly includes a user plane function (user plane function, UPF) and a control plane function of a data plane. The user plane function is mainly responsible for data packet forwarding, quality of service (quality of service, QoS) control, charging information collection, connection to an external network, and the like, and includes related functions of a serving gateway (serving gateway, SGW) and a public data network gateway (public data network gateway, PDN-GW) in a long term evolution (long term evolution, LTE) technology. The control plane function is mainly responsible for service procedure interaction, and delivering a data packet forwarding policy, a QoS control policy, and the like to a user plane. For example, network elements in the control plane function mainly include a mobility management function (access and mobility function, AMF), a session management function (session management function, SMF), a policy control function (policy control function, PCF), an application function (application function, AF), a network exposure function (network exposure function, NEF), and the like. The AMF network element is connected to the access network device through an NG interface, and may manage access of the terminal device to a core network. An LMF network element may locate the terminal device based on a locating request of the AMF network element. It should be understood that a function of the LMF network element herein may also be referred to as a function of an LMF. In other words, the LMF network element is configured to implement the function of the LMF. The SMF network element is mainly responsible for creating, deleting, and the like of a user protocol data unit (protocol data unit, PDU) session, and maintaining a PDU session context and user plane forwarding pipeline information. The PCF is mainly responsible for executing policy control, and is similar to a policy and charging rules function (policy and charging rules function, PCRF) network element in a long term evolution (long term evolution, LTE) technology, including generating and managing a user, a session, a quality of service (quality of service, QoS) flow processing policy, and quality of service, generating a charging rule, and delivering a corresponding rule to a UPF network element via the SMF. The AF network element is mainly responsible for providing functions of various services, can interact with the core network via the NEF network element, and can interact with a policy management framework to perform policy management. The NEF is configured to: provide a framework, authentication, and an interface that are related to network capability exposure, and transmit information between a network function of a 5G system and another network function.

5th generation mobile communication technology (5th generation mobile communication technology, 5G) standalone (standalone, SA) networking is a completely independently constructed 5G network, has three application scenarios: enhanced mobile broadband (enhanced mobile broadband, eMMB), ultra-reliable and low-latency communication (ultra-reliable and low-latency communication, URLLC), and massive machine type of communication (massive machine type of communication, mMTC), has new 5G features such as network slicing, edge computing, and cloud-network synergy, and can provide users with various 5G applications, such as virtual reality (Virtual Reality, VR), augmented reality (Augmented Reality, AR), ultra high-definition video, smart industry, smart healthcare, smart education, and smart business.

The SA networking may support two access modes: an idle (idle) state access mode and an inactive (inactive) state access mode, to implement communication between the terminal device and a network device. The inactive (inactive) state access mode may also be referred to as a deactivated state access mode. This is not limited in embodiments of this application.

In embodiments of this application, the idle state access mode and the inactive state access mode are studied, and it is found that an access delay is long in both idle state access and inactive state access.

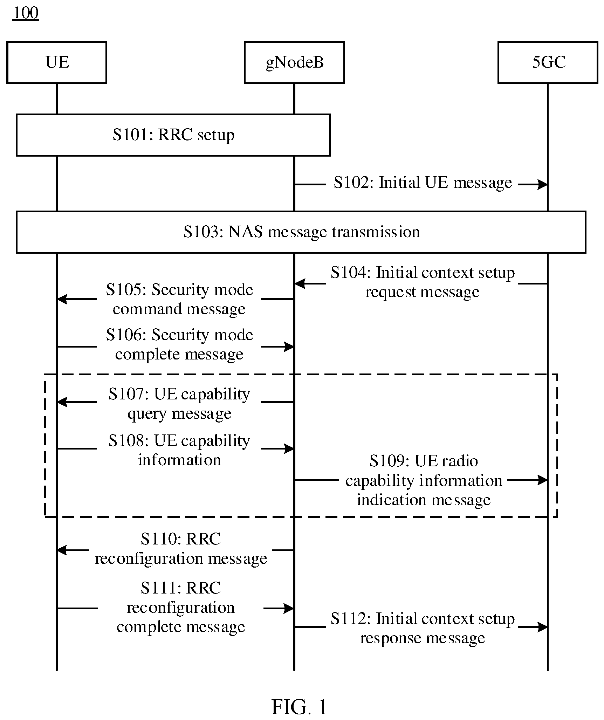

For example, FIG. 1 shows a schematic flowchart of an idle state access mode 100 in an NR SA networking condition. As shown in FIG. 1, the idle state access mode 100 may include the following steps:
S101: User equipment (user equipment, UE) and a gNodeB (gNodeB) set up radio resource control (radio resource control, RRC).
S102: The gNodeB sends an initial UE message to a core network (5G core network, 5GC) device, to trigger a connection setup with the 5GC; and correspondingly, the 5GC receives the initial UE message.

The initial UE message may be INITIAL UE MESSAGE. However, embodiments of this application are not limited thereto.

S103: The UE, the gNodeB, and the 5GC perform non-access stratum (non-access stratum, NAS) message transmission between each other.

The gNodeB transparently transmits a NAS message between the UE and the 5GC, to complete IDENTITY query, authentication, a NAS security mode, and a registration procedure.

S104: The 5GC sends an initial context setup request message to the gNodeB, where the initial context setup request message is used to request to start an initial context setup procedure; and correspondingly, the gNodeB may receive the initial context setup request message.

The initial context setup request message may be INITIAL CONTEXT SETUP REQUEST. However, embodiments of this application are not limited thereto.

S105: The gNodeB sends a security mode command message to the UE, where the security mode command message is used to configure a security algorithm for the UE; and correspondingly, the UE receives the security mode command message.

The security mode command message may be a SecurityModeCommand message. The gNodeB may configure integrity protection and an encryption algorithm for the UE using the SecurityModeCommand message. However, embodiments of this application are not limited thereto.

S106: After the UE completes configuration based on the security mode command message, the UE may send a security mode complete message to the gNodeB, where the security mode complete message indicates that security mode configuration is completed; and correspondingly, the gNodeB receives the security mode complete message.

The security mode complete message may be a SecurityModeComplete message. However, embodiments of this application are not limited thereto.

S107: The gNodeB sends a UE capability query message to the UE, where the UE capability query message is used to query a capability of the UE; and correspondingly, the UE receives the UE capability query message from the gNodeB.

The UE capability query message may be a UECapabilityEnquiry message. However, embodiments of this application are not limited thereto.

S108: The UE sends UE capability information to the gNodeB, where the UE capability information includes the capability of the UE; and correspondingly, the gNodeB receives the UE capability information.

The UE capability information may be UECapabilityInformation. However, embodiments of this application are not limited thereto.

S109: The gNodeB sends a UE radio capability information indication message to the 5GC.

The UE radio capability information indication message may be UE RADIO CAPABILITY INFO INDICATION. However, embodiments of this application are not limited thereto.

S110: The gNodeB sends an RRC reconfiguration message to the UE, where the RRC reconfiguration message is used to perform RRC reconfiguration for the UE; and correspondingly, the UE receives the RRC reconfiguration message.

The RRC reconfiguration message may be RRCReconfiguration. However, embodiments of this application are not limited thereto. The RRC reconfiguration message is used to perform RRC reconfiguration for the terminal device, that is, configure a data radio bearer (data radio bearer, DRB), a signaling radio bearer (signaling radio bearer, SRB), and the like for the UE.

S111: After the UE performs RRC reconfiguration, the UE sends an RRC reconfiguration complete message to the gNodeB, where the RRC reconfiguration complete message indicates that RRC reconfiguration is completed.

The RRC reconfiguration complete message may be an RRCReconfigurationComplete message. However, embodiments of this application are not limited thereto.

S112: The gNodeB sends an initial context setup response message to the 5GC, where the initial context setup response message indicates that an initial context setup procedure ends.

The initial context setup response message may be INITIAL CONTEXT SETUP RESPONSE. However, embodiments of this application are not limited thereto.

In this embodiment of this application, it is found, by analyzing the foregoing access process, that before the gNodeB sends the UE capability query message to the UE, the gNodeB needs to receive the security mode complete message from the UE, that is, S107 needs to be performed after S106, and can report the capability of the terminal device only after security configuration is completed, resulting in an excessively long delay. In addition, before the gNodeB sends the RRC reconfiguration message to the UE, the gNodeB needs to receive the capability information from the UE, that is, S110 needs to be performed after S108, and RRC reconfiguration can be performed only after the capability information is reported. Consequently, a delay is excessively long, and communication efficiency is reduced. A reason for the delay process may also be understood as that a signaling procedure in the initial context setup procedure is sent in serial. To be specific, after a security configuration process is completed, a UE capability query process is performed, and an RRC reconfiguration process is performed after the UE capability query process.

It should be noted that, in the initial context setup procedure, S107 to S109 are optional. When the initial context setup request message (namely, INITIAL CONTEXT SETUP REQUEST) does not carry the capability of the UE or the gNodeB needs to query the UE for the capability of the UE, the initial context setup procedure includes the UE capability query process. In other words, the method 100 includes S107 to S109. The security mode configuration process and the UE capability query process are performed in serial. After receiving the security mode complete (SecurityModeComplete) message, the gNodeB delivers the UE capability query (UECapabilityEnquiry) message.

When the initial context setup request message (namely, INITIAL CONTEXT SETUP REQUEST) carries the capability of the UE or the gNodeB does not need to query the UE for the capability of the UE, the initial context setup procedure does not include the UE capability query process. In other words, the method 100 does not include S107 to S109. The security mode configuration process and the RRC reconfiguration process are performed in serial. After receiving the security mode complete (SecurityModeComplete) message, the gNodeB delivers the RRC reconfiguration (RRCReconfiguration) message.

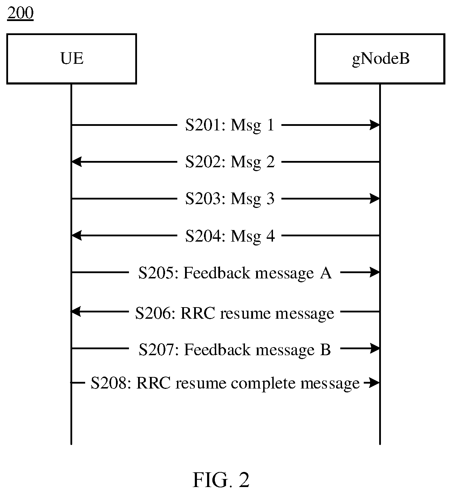

For example, FIG. 2 shows a schematic flowchart of an inactive state access mode 200 in an NR SA networking condition. As shown in FIG. 1, the inactive state access mode may include the following steps:
S201: UE sends a message 1 (message 1, Msg 1) to a gNodeB; and correspondingly, the gNodeB receives the Msg 1.

There may be one or more UEs that send the Msg 1 to the gNodeB. This is not limited in embodiments of this application. When a plurality of UEs send Msgs 1 to the gNodeB, the Msgs 1 sent by the UEs may be the same or may be different. This is not limited in embodiments of this application.

When the gNodeB receives the Msgs 1 sent by the plurality of UEs, the UE shown in FIG. 2 may be one of devices that send the Msgs 1 to the gNodeB.

The Msg 1 may carry a preamble (preamble) identifier. The preamble identifier may be used to notify the gNodeB that there is a random access request. The preamble identifier may also be referred to as a random access preamble (random access preamble). This is not limited in embodiments of this application.

S202: The gNodeB sends a message 2 (message 2, Msg 2) to the UE based on the Msg 1, where the Msg 2 carries uplink transmission control information, and the uplink transmission control information indicates the UE to send a message 3 (message 3, Msg 3).

The Msg 2 may be a random access response (random access response, RAR) message.

The uplink transmission control information may also be referred to as uplink scheduling control information, uplink transmission indication information, or uplink scheduling indication information. This is not limited in embodiments of this application.

The uplink transmission control information may be sent via the Msg 2. In other words, the gNodeB sends the Msg 2 to the UE, where the Msg 2 includes the uplink transmission control information, and the uplink transmission control information indicates the UE to send the Msg 3. The Msg 2 may further include information having another function. This is not limited in embodiments of this application.

When the plurality of UEs send the Msgs 1 to the gNodeB, the gNodeB may send Msgs 2 to the plurality of UEs.

S203: The UE sends the Msg 3 to the gNodeB based on the Msg 2, to trigger the gNodeB to perform an RRC resume process; and correspondingly, the gNodeB receives the Msg 3 sent by the UE.

The Msg 3 may carry a resume request message and a unique identifier of the UE, where the resume request message may be RRCResumeRequest. However, embodiments of this application are not limited thereto. The unique identifier of the UE is used for conflict resolution. When the plurality of UEs send the Msgs 1 to the gNodeB, each of the plurality of UEs may send the Msg 3 to the gNodeB, and Msgs 3 of different UEs include different identifiers.

S204: The gNodeB sends a message 4 (message 4, Msg 4) to the UE based on the Msg 3; and correspondingly, the UE receives the Msg 4.

The Msg 4 may carry a contention resolution message, where the contention resolution message may be a contention resolution medium access control protocol control element (medium access control control element, MAC CE) message, for example, a Contention resolution identity MAC CE. However, embodiments of this application are not limited thereto.

When the plurality of UEs send the Msgs 1 to the gNodeB, each of the plurality of UEs may send the Msg 3 to the gNodeB, and the gNodeB may determine, from the plurality of UEs based on Msgs 3 sent by the UEs, one UE that performs random access, and send the Msg 4 to the UE.

S205: The UE sends a feedback message A to the gNodeB, where the feedback message A indicates that the Msg 4 is not received or has been received; and correspondingly, the gNodeB receives the feedback message A.

The feedback message A may be an acknowledgement (acknowledgement, ACK) identifier or a negative acknowledgement (negative acknowledgment, NACK) identifier. However, embodiments of this application are not limited thereto.

If the UE successfully receives the Msg 4, the UE may send an ACK to the gNodeB. If the UE fails to receive the Msg 4, the UE may send a NACK to the gNodeB.

S206: The feedback message A indicates that the UE has received the Msg 4, and the gNodeB sends an RRC resume message to the UE, where the RRC resume message indicates the UE to perform RRC resume; and correspondingly, the UE receives the RRC resume message.

The RRC resume message may be RRCResume. However, embodiments of this application are not limited thereto.

S207: The UE sends a feedback message B to the gNodeB, where the feedback message B indicates that the RRC resume message is not received or has been received; and correspondingly, the gNodeB receives the feedback message B.

The feedback message B may be an ACK or a NACK. However, embodiments of this application are not limited thereto.

If the UE successfully receives the RRC resume message, the UE may send the ACK to the gNodeB. If the UE fails to receive the RRC resume message, the UE may send the NACK to the gNodeB.

S208: The feedback message B indicates that the RRC resume message has been received, the UE performs RRC connection resume processing based on the RRC resume message, and after processing is completed, the UE may send an RRC resume complete message to the gNodeB; and correspondingly, the gNodeB receives the RRC resume complete message, that is, an inactive state access process is completed.

The RRC resume complete message may be RRCResumeComplete. However, embodiments of this application are not limited thereto.

In this embodiment of this application, it is found, by analyzing the foregoing access process, that the gNodeB needs to receive the feedback message A before sending the RRC resume message to the UE, that is, S206 needs to be performed after S205, and it is determined that RRC resume is performed only after the UE receives the feedback message A. Consequently, a delay is excessively long. A reason for the delay process may also be understood as that the Msg 4 and the RRC resume message are transmitted in serial. To be specific, the gNodeB first sends the Msg 4, and sends the RRC resume message only after determining that the UE receives the feedback message A.

In conclusion, in an initial context setup procedure of idle state access, a serial transmission mechanism is used in the conventional technology, where the security mode command (SecurityModeCommand) message and the UE capability query (UECapabilityEnquiry) message are transmitted in serial (when the gNodeB needs to query the capability of the UE), or the security mode command (SecurityModeCommand) message and the RRC reconfiguration (RRCReconfiguration) message are transmitted in serial (when the gNodeB does not need to query the capability of the UE). When the serial transmission mechanism is used, a delay of the initial context setup procedure is long.

In an inactive state access process, a serial transmission mechanism is also used in the conventional technology, where the Msg 4 and the RRC resume (RRC Resume) message are sent in serial. When the serial transmission mechanism is used, a delay of the inactive state process is large.

In view of this, embodiments of this application provide a communication method and a communication apparatus. A parallel transmission mechanism or a combined transmission mechanism is used in an initial context setup procedure of idle state access and an inactive state access process, to help reduce an access delay in the initial context setup procedure of idle state access and an access delay in the inactive state access process, and improve communication efficiency.

To clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not limit a definite difference.

It should be noted that in this application, the word such as "example" or "for example" represents giving an example, an illustration, or a description. Any embodiment or design scheme described with "example" or "for example" in this application should not be explained as being more preferred or having more advantages than another embodiment or design scheme. Exactly, use of the word "example", "for example", or the like is intended to present a related concept in a specific manner.

In addition, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one (piece) of a, b, and c may represent a, b, c, a and b, a and c, b and c, or a, b, and c, where a, b, and c may be single or plural.

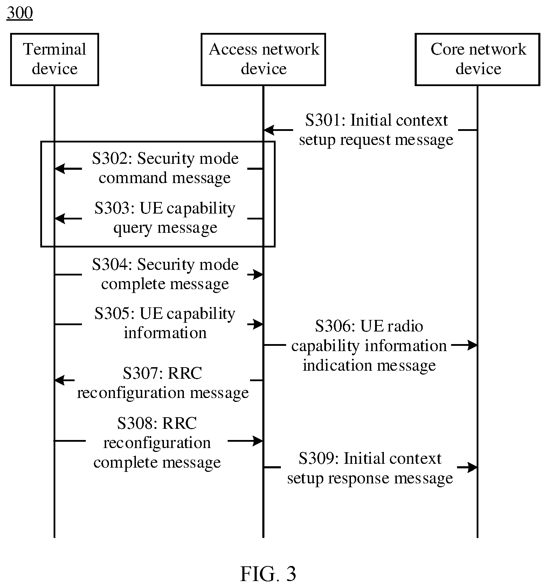

FIG. 3 shows a schematic flowchart of a communication method 300. The method 300 may include the following steps:
S301: A core network device sends an initial context setup request message to an access network device, where the initial context setup request message is used to request to start an initial context setup procedure; and correspondingly, the access network device may receive the initial context setup request message.

If the method 300 is applied to a 5G technology, the core network device may be a 5GC, and the access network device may be a gNodeB. However, embodiments of this application are not limited thereto.

The initial context setup request message may be INITIAL CONTEXT SETUP REQUEST. However, embodiments of this application are not limited thereto.

S302: The access network device sends a security mode command message to a terminal device, where the security mode command message is used to configure a security algorithm for the terminal device; and correspondingly, the terminal device receives the security mode command message.

The terminal device may be UE. However, embodiments of this application are not limited thereto.

The security mode command message may be a SecurityModeCommand message. The access network device may configure integrity protection and an encryption algorithm for the terminal device using the SecurityModeCommand message. However, embodiments of this application are not limited thereto.

S303: The access network device sends a UE capability query message to the terminal device, where the UE capability query message is used to request the terminal device to report a capability of the terminal device; and correspondingly, the terminal device receives the UE capability query message from the access network device.

The UE capability query message may be a UE Capability Enquiry message. However, embodiments of this application are not limited thereto.

S304: After the terminal device completes configuration based on the security mode command message, the terminal device may send a security mode complete message to the access network device, where the security mode complete message indicates that security mode configuration is completed; and correspondingly, the access network device receives the security mode complete message.

The security mode complete message may be a SecurityModeComplete message. However, embodiments of this application are not limited thereto.

S305: The terminal device sends UE capability information to the access network device based on the UE capability query message, where the UE capability information includes the capability of the terminal device; and correspondingly, the access network device receives the UE capability information.

The UE capability information may be CapabilityInformation of the terminal device. However, embodiments of this application are not limited thereto.

S306: The access network device sends a UE radio capability information indication message to the core network device.

The UE radio capability information indication message may be RADIO CAPABILITY INFO INDICATION of the terminal device.

S307: The access network device sends an RRC reconfiguration message to the terminal device, where the RRC reconfiguration message is used to perform RRC reconfiguration for the terminal device; and correspondingly, the terminal device receives the RRC reconfiguration message.

The RRC reconfiguration message may be RRCReconfiguration. However, embodiments of this application are not limited thereto. The RRC reconfiguration message is used to perform RRC reconfiguration for the terminal device, that is, configure a data radio bearer (data radio bearer, DRB), a signaling radio bearer (signaling radio bearer, SRB), and the like for the terminal device.

S308: After the terminal device performs RRC reconfiguration, the terminal device sends an RRC reconfiguration complete message to the access network device, where the RRC reconfiguration complete message indicates that RRC reconfiguration is completed.

The RRC reconfiguration complete message may be an RRCReconfigurationComplete message. However, embodiments of this application are not limited thereto.

S309: The access network device sends an initial context setup response message to the core network device, where the initial context setup response message indicates that the initial context setup procedure ends.

According to the communication method provided in this embodiment of this application, when the initial context setup procedure of idle state access includes a UE capability query process (that is, the initial context setup request message does not carry the capability information of the terminal device, or the access network device needs to query the terminal device for the capability information of the terminal device), the security mode command (SecurityModeCommand) message and the UE capability query (UECapabilityEnquiry) message are transmitted in parallel. In other words, after sending the security mode command message to the terminal device, the access network device may immediately send the UE capability query message to the terminal device, that is, deliver the UE capability query (UECapabilityEnquiry) message without receiving the security mode complete (SecurityModeComplete) message. In this way, a time for waiting for the security mode complete message can be reduced, thereby helping reduce an access delay in the initial context setup procedure of idle state access, and improving communication efficiency.

Optionally, the security mode command (SecurityModeCommand) message and the UE capability query (UECapabilityEnquiry) message may occupy a same time-frequency resource, or may occupy different time-frequency resources. This is not limited in embodiments of this application.

If the security mode command message and the UE capability query message occupy different time-frequency resources, a time-frequency resource occupied by the security mode command message may be adjacent to a time-frequency resource occupied by the UE capability query message.

If the security mode command message and the UE capability query message occupy the same time-frequency resource, time-frequency resources can be saved. The method may also be referred to as combined transmission of the security mode command message and the UE capability query message. This is not limited in embodiments of this application.

Optionally, the security mode complete (SecurityModeComplete) message and the UE capability information (CapabilityInformation) may occupy a same time-frequency resource, or may occupy different time-frequency resources. This is not limited in embodiments of this application.

If the security mode complete message and the UE capability information occupy the same time-frequency resource, time-frequency resources can be saved. The method may also be referred to as combined transmission of the security mode complete message and the UE capability information. This is not limited in embodiments of this application.

In an optional embodiment, the security mode command (SecurityModeCommand) message, the UE capability query (UECapabilityEnquiry) message, and the RRC reconfiguration message are all transmitted in parallel. In other words, after sending the security mode command message to the terminal device, the access network device may send the UE capability query message to the terminal device. In addition, the access network device may first send the RRC reconfiguration message to the terminal device, deliver the UE capability query (UECapabilityEnquiry) message without receiving the security mode complete (SecurityModeComplete) message, and send the RRC reconfiguration message to the terminal device without receiving the UE capability information. In this way, time for waiting for the security mode complete message and time for waiting for receiving the UE capability information can be reduced, thereby helping reduce an access delay in the initial context setup procedure of idle state access, and improving communication efficiency.

In this implementation, the security mode command (SecurityModeCommand) message, the UE capability query (UECapabilityEnquiry) message, and the RRC reconfiguration message may occupy a same time-frequency resource, or may occupy different time-frequency resources. This is not limited in embodiments of this application.

If the security mode command message, the UE capability query message, and the RRC reconfiguration message occupy the same time-frequency resource, time-frequency resources can be saved. The method may also be referred to as combined transmission of the security mode command message, the UE capability query message, and the RRC reconfiguration message. This is not limited in embodiments of this application.

The security mode complete (SecurityModeComplete) message, the UE capability information (CapabilityInformation), and the RRC reconfiguration complete message may occupy a same time-frequency resource, or may occupy different time-frequency resources. This is not limited in embodiments of this application.

If the security mode complete message, the UE capability information, and the RRC reconfiguration complete message occupy the same time-frequency resource, time-frequency resources can be saved. The method may also be referred to as combined transmission of the security mode configuration complete message, the UE capability information, and the RRC reconfiguration complete message. This is not limited in embodiments of this application.

In the method 300, when the initial context setup request message (namely, INITIAL CONTEXT SETUP REQUEST) does not carry the capability of the terminal device or the access network device needs to query the terminal device for the capability of the terminal device, an initial context setup procedure includes a terminal device capability query process. An embodiment of this application further provides a communication method in which an initial context setup procedure does not include a terminal device capability query process.

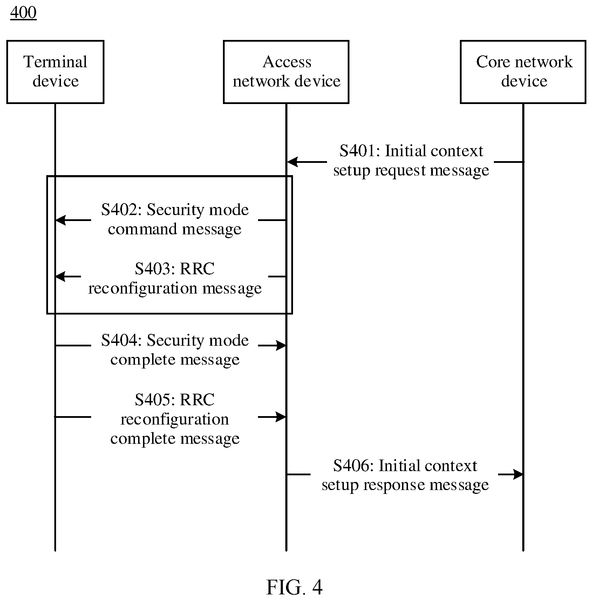

For example, FIG. 4 shows a schematic flowchart of a communication method 400. The method 400 may include the following steps:
S401: A core network device sends an initial context setup request message to an access network device, where the initial context setup request message is used to request to start an initial context setup procedure; and correspondingly, the access network device may receive the initial context setup request message.

If the method 400 is applied to a 5G technology, the core network device may be a 5GC, and the access network device may be a gNodeB. However, embodiments of this application are not limited thereto.

The initial context setup request message may be INITIAL CONTEXT SETUP REQUEST. However, embodiments of this application are not limited thereto.

S402: The access network device sends a security mode command message to a terminal device, where the security mode command message is used to configure a security algorithm for the terminal device; and correspondingly, the terminal device receives the security mode command message.

The terminal device may be UE. However, embodiments of this application are not limited thereto.

The security mode command message may be a SecurityModeCommand message. The access network device may configure integrity protection and an encryption algorithm for the terminal device using the SecurityModeCommand message. However, embodiments of this application are not limited thereto.

S403: The access network device sends an RRC reconfiguration message to the terminal device, where the RRC reconfiguration message is used to perform RRC reconfiguration for the terminal device; and correspondingly, the terminal device receives the RRC reconfiguration message.

The RRC reconfiguration message may be RRCReconfiguration. However, embodiments of this application are not limited thereto. The RRC reconfiguration message is used to perform RRC reconfiguration for the terminal device, that is, configure a data radio bearer (data radio bearer, DRB), a signaling radio bearer (signaling radio bearer, SRB), and the like for the terminal device.

S404: After the terminal device completes configuration based on the security mode command message, the terminal device may send a security mode complete message to the access network device, where the security mode complete message indicates that security mode configuration is completed; and correspondingly, the access network device receives the security mode complete message.

The security mode complete message may be a SecurityModeComplete message. However, embodiments of this application are not limited thereto.

S405: After the terminal device performs RRC reconfiguration, the terminal device sends an RRC reconfiguration complete message to the access network device, where the RRC reconfiguration complete message indicates that RRC reconfiguration is completed.

The RRC reconfiguration complete message may be an RRCReconfigurationComplete message. However, embodiments of this application are not limited thereto.

S406: The access network device sends an initial context setup response message to the core network device, where the initial context setup response message indicates that the initial context setup procedure ends.

According to the communication method provided in this embodiment of this application, when the initial context setup procedure of idle state access does not include a UE capability query process (that is, the initial context setup request message carries UE capability information of the terminal device, or the access network device does not need to query the terminal device for the UE capability information of the terminal device), the security mode command (SecurityModeCommand) message and the RRC reconfiguration (RRCReconfiguration) message are transmitted in parallel. In other words, after sending the security mode command message to the terminal device, the access network device may immediately send the RRC reconfiguration message to the terminal device, that is, deliver the RRC reconfiguration message without receiving the security mode complete (SecurityModeComplete) message. In this way, a time for waiting for the security mode complete message can be reduced, thereby helping reduce an access delay in the initial context setup procedure of idle state access, and improving communication efficiency.

Optionally, the security mode command (SecurityModeCommand) message and the RRC reconfiguration (RRCReconfiguration) message may occupy a same time-frequency resource, or may occupy different time-frequency resources. This is not limited in embodiments of this application.

If the security mode command message and the RRC reconfiguration message occupy the same time-frequency resource, time-frequency resources can be saved. The method may also be referred to as combined transmission of the security mode command message and the RRC reconfiguration message. This is not limited in embodiments of this application.

Optionally, the security mode complete (SecurityModeComplete) message and the RRC reconfiguration complete (RRCReconfigurationComplete) message may occupy a same time-frequency resource, or may occupy different time-frequency resources. This is not limited in embodiments of this application.

If the security mode complete message and the RRC reconfiguration complete message occupy the same time-frequency resource, time-frequency resources can be saved. The method may also be referred to as combined transmission of the security mode complete message and the RRC reconfiguration complete message. This is not limited in embodiments of this application.

The method 300 and the method 400 are initial context setup procedures of idle state access. The following describes an inactive state access process.

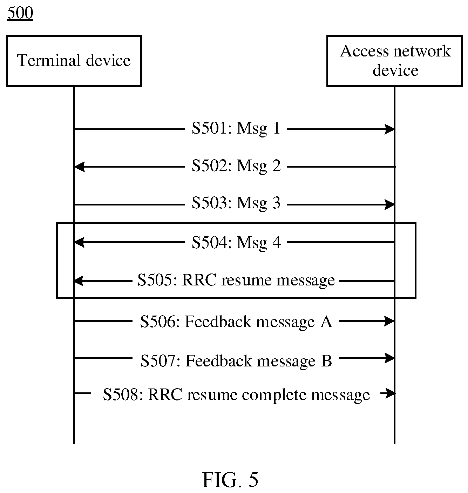

For example, FIG. 5 shows a schematic flowchart of a communication method 500. The method 500 may include the following steps:
S501: A terminal device sends a Msg 1 to an access network device; and correspondingly, the access network device receives the Msg 1.

There may be one or more terminal devices that send the Msg 1 to the access network device. This is not limited in embodiments of this application.

The Msg 1 may carry a preamble identifier. The preamble identifier may be used to notify the access network device that there is a random access request.

S502: The access network device sends a Msg 2 to the terminal device based on the Msg 1, where the Msg 2 carries uplink transmission control information, and the uplink transmission control information indicates the terminal device to send a Msg 3.

The Msg 2 may be an RAR message. The uplink transmission control information may also be referred to as uplink scheduling control information, uplink transmission indication information, or uplink scheduling indication information. This is not limited in embodiments of this application.

The uplink transmission control information may be sent via the Msg 2. In other words, the access network device sends the Msg 2 to the terminal device, where the Msg 2 includes the uplink transmission control information, and the uplink transmission control information indicates the terminal device to send the Msg 3. The Msg 2 may further include information having another function. This is not limited in embodiments of this application.

When a plurality of terminal devices send Msgs 1 to the access network device, the access network device may send Msgs 2 to the plurality of terminal devices.

S503: The terminal device sends the Msg 3 to the access network device based on the Msg 2, to trigger the access network device to perform an RRC resume process; and correspondingly, the access network device receives the Msg 3 sent by the terminal device.

The Msg 3 may carry a resume request message and a unique identifier of the terminal device, where the resume request message may be RRCResumeRequest. However, embodiments of this application are not limited thereto. The unique identifier of the terminal device is used for conflict resolution. When the plurality of terminal devices send the Msgs 1 to the access network device, each of the plurality of terminal devices may send the Msg 3 to the access network device, and Msgs 3 of different terminal devices include different identifiers.

S504: The access network device sends a Msg 4 to the terminal device; and correspondingly, the terminal device receives the Msg 4.

The Msg 4 may carry a contention resolution medium access control protocol control element (medium access control control element, MAC CE) message, for example, a Contention resolution identity MAC CE. However, embodiments of this application are not limited thereto.

S505: The access network device sends an RRC resume message to the terminal device, where the RRC resume message indicates the terminal device to perform RRC resume.

The RRC resume message may be RRCResume. However, embodiments of this application are not limited thereto.

S506: The terminal device sends a feedback message A to the access network device based on the Msg 4, where the feedback message A indicates that the Msg 4 is not received or has been received; and correspondingly, the access network device receives the feedback message A.

S507: The terminal device sends a feedback message B to the access network device based on the RRC resume message, where the feedback message B indicates that the RRC resume message is not received or has been received; and correspondingly, the access network device receives the feedback message B.

The feedback message B may be an acknowledgement (acknowledgement, ACK) character. However, embodiments of this application are not limited thereto.

S508: The feedback message B indicates that the RRC resume message has been received, the terminal device performs RRC connection resume processing based on the RRC resume message, and after processing is completed, the terminal device may send an RRC resume complete message to the access network device; and correspondingly, the access network device receives the RRC resume complete message, that is, the inactive state access process is completed.

The RRC resume complete message may be RRCResumeComplete. However, embodiments of this application are not limited thereto.

It should be noted that a sequence of sending the feedback message A and the feedback message B by the terminal device to the access network device is not limited in this application. In other words, the terminal device may first send the feedback message A to the access network device, and then send the feedback message B to the access network device, or may first send the feedback message B to the access network device, and then send the feedback message A to the access network device.

According to the communication method provided in this embodiment of this application, in the inactive state access process, the Msg 4 and the RRC resume (RRC Resume) message are transmitted in parallel. In other words, after sending the Msg 4 to the terminal device, the access network device may immediately send the RRC resume message to the terminal device, that is, deliver the RRC resume message without receiving the feedback message A. In this way, a time for waiting for the feedback message A can be reduced, thereby helping reduce an access delay in the inactive state access process, and improving communication efficiency.

It should be noted that the Msg 4 indicates a contention resolution message. That the Msg 4 and the RRC resume (RRC Resume) message are transmitted in parallel means that the contention resolution message and the RRC resume (RRC Resume) message are transmitted in parallel.

The method provided in this embodiment of this application is further applicable to an RRC setup process. In the RRC setup process, the Msg 3 in the method 500 may carry an RRC setup request message. For example, the Msg 3 may carry RRCSetupRequest. The access network device may send a Msg 4, namely, the contention resolution message, to the terminal device based on the Msg 3, and send an RRC setup message to the terminal device. Correspondingly, the terminal device may receive the Msg 4, and may send a feedback message A to the access network device, where the feedback message A indicates that the Msg 4 is not received or has been received, and the terminal device may further send a feedback message B to the access network device, where the feedback message B indicates an RRC setup complete message or an RRC setup failure message.

The setup process provided in this embodiment of this application may be further applied to an RRC setup process in an idle state access process, and S 101 in the method 100 may include the setup process provided in this embodiment of this application.

Optionally, the Msg 4 (namely, the contention resolution message) and the RRC resume (RRC Resume) message (or the RRC setup message) may occupy a same time-frequency resource, or may occupy different time-frequency resources. This is not limited in embodiments of this application.

If the Msg 4 (namely, the contention resolution message) and the RRC resume message (or the RRC setup message) occupy the same time-frequency resource, time-frequency resources can be saved. The method may also be referred to as combined transmission of the Msg 4 and the RRC resume message (or the RRC setup message). This is not limited in embodiments of this application.

Optionally, the feedback message A and the feedback message B may occupy a same time-frequency resource, or may occupy different time-frequency resources. This is not limited in embodiments of this application.

If the feedback message A and the feedback message B occupy the same time-frequency resource, time-frequency resources can be saved. The method may also be referred to as combined transmission of the feedback message A and the feedback message B. This is not limited in embodiments of this application.

Compared with serial transmission, combined transmission of the Msg 4 (namely, the contention resolution message) and the RRC resume message (or the RRC setup message) and combined transmission of the feedback message A and the feedback message B help reduce a delay.

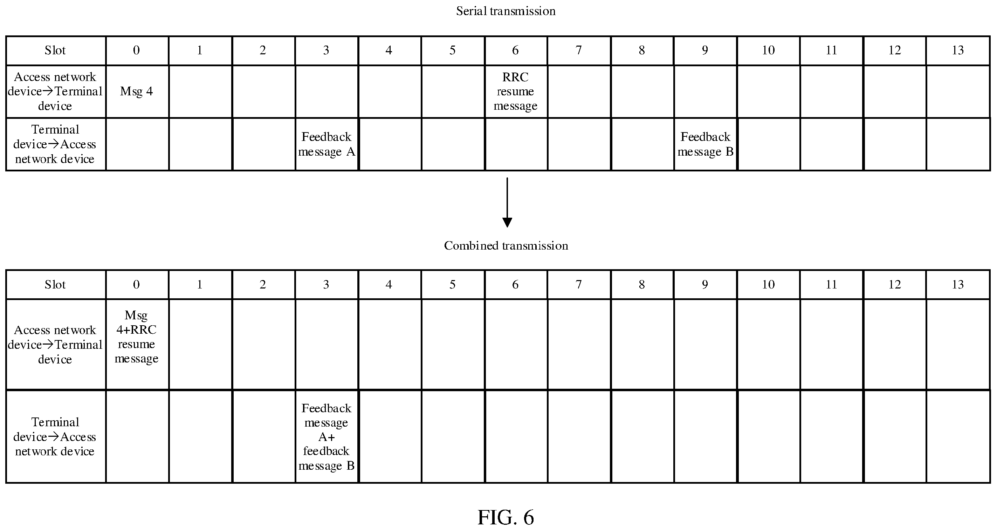

For example, FIG. 6 shows a diagram of time sequence comparison between serial transmission and combined transmission. As shown in FIG. 6, to distinguish between different slots, 1, 2, 3, 4, 5, 6, 7, 8, 9, 10, and 11 represent different slots. Each number indicates a slot.

In a serial transmission manner, the terminal device receives the Msg 4 from the access network device in a slot 0, and sends the feedback message A to the access network device after a delay of two slots, that is, in a slot 3. The feedback message A indicates that the Msg 4 has been received. After receiving the feedback message A, the access network device sends the RRC resume message to the terminal device after a delay of two slots, that is, in a slot 6. After receiving the RRC resume message, the terminal device sends the feedback message B to the access network device after a delay of two slots, that is, in a slot 9. The feedback message B indicates that the RRC resume message has been received.

In a parallel transmission manner, the terminal device receives the Msg 4 message and the RRC resume message from the access network device in a slot 0, and sends the feedback message A and the feedback message B to the access network device after a delay of two slots, that is, in a slot 3. The feedback message A indicates that the Msg 4 has been received, and the feedback message B indicates that the RRC resume message has been received.

Compared with the serial transmission manner, the parallel transmission manner can obtain a delay gain of 9-3=6 slots.

It should be noted that FIG. 6 is merely used as an example for description in embodiments of this application. This is not limited.

In an optional embodiment, when the RRC resume (RRC resume) message occupies a large amount of data, the RRC resume message needs to be fragmented when transmitted at a media access control (media access control, MAC) layer, and the RRC resume message may be fragmented into a plurality of fragments and transmitted in different transmission slots (slot). When the RRC resume message is fragmented into the plurality of fragments, the RRC resume message may include a plurality of blocks of data. If the RRC resume message includes M blocks of data, that is, the RRC resume message is fragmented into M fragments, N blocks of data in the M blocks of data and the contention resolution MAC CE may be transmitted in parallel. In other words, the N blocks of data and the contention resolution MAC CE occupy a same time-frequency resource, and remaining M-N blocks of data may occupy a same time-frequency resource, or may occupy different time-frequency resources. This is not limited in embodiments of this application.

For example, if the RRC resume message needs to be fragmented into two fragments at the MAC layer for transmission, M is equal to 2, N is equal to 1, and the RRC resume message may include an RRC resume message fragment 1 (RRC resume fragment 1) and an RRC resume message fragment 2 (RRC resume fragment 2). The Msg 4 and the RRC resume message fragment 1 may occupy a same time-frequency resource, and the terminal device feeds back a message in a same slot.

When the RRC resume message is transmitted in fragments, compared with serial transmission, combined transmission of the Msg 4 (namely, the contention resolution message) and data obtained by fragmenting the RRC resume message and combined transmission of the feedback message A and the feedback message B help reduce a delay.

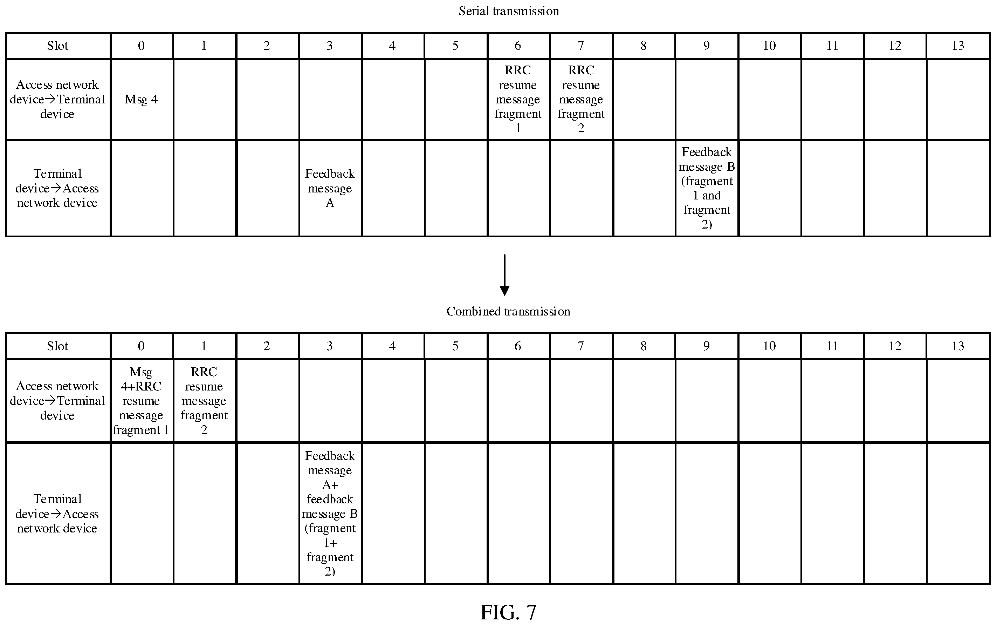

For example, FIG. 7 shows a diagram of time sequence comparison between serial transmission and combined transmission in a fragmentation scenario. As shown in FIG. 7, to distinguish between different slots, 1, 2, 3, 4, 5, 6, 7, 8, 9, 10, and 11 represent different slots. Each number indicates a slot.

In a serial transmission manner, the terminal device receives the Msg 4 from the access network device in a slot 0, and sends the feedback message A to the access network device after a delay of two slots, that is, in a slot 3. After receiving the feedback message A, the access network device sends the RRC resume message fragment 1 to the terminal device after a delay of two slots, that is, in a slot 6, and sends the RRC resume message fragment 2 to the terminal device in a slot 7. After receiving the RRC resume message fragment 1 and the RRC resume message fragment 2, the terminal device sends the feedback message B to the access network device in a slot 9. The feedback message B includes a feedback message B fragment 1 and a feedback message B fragment 2. It should be noted that the feedback message B fragment 1 and the feedback message B fragment 2 may occupy a slot shown in FIG. 7, or may occupy different slots (for example, adjacent slots). This is not limited in embodiments of this application. It should be further noted that, if the RRC resume message includes more than two segments, the more than two segments may occupy two slots, or may occupy more than two slots. This is not limited in embodiments of this application. It should be understood that a quantity of slots that can be occupied by the RRC resume message is equal to a quantity of fragments at most.

In a parallel transmission manner, the terminal device receives the Msg 4 and the RRC resume message fragment 1 from the access network device in a slot 0, receives the RRC resume message fragment 2 from the access network device in a slot 1, and sends the feedback message A and the feedback message B to the access network device in a slot 3. The feedback message B includes a feedback message B fragment 1 and a feedback message B fragment 2.

Compared with the serial transmission manner, the parallel transmission manner can obtain a delay gain of 9-3=6 slots.

It should be noted that FIG. 7 is merely used as an example for description in embodiments of this application. This is not limited.

Sequence numbers of the foregoing processes do not mean execution sequences. The execution sequences of the processes should be determined according to functions and internal logic of the processes, and should not be construed as any limitation on the implementation processes of embodiments of this application.

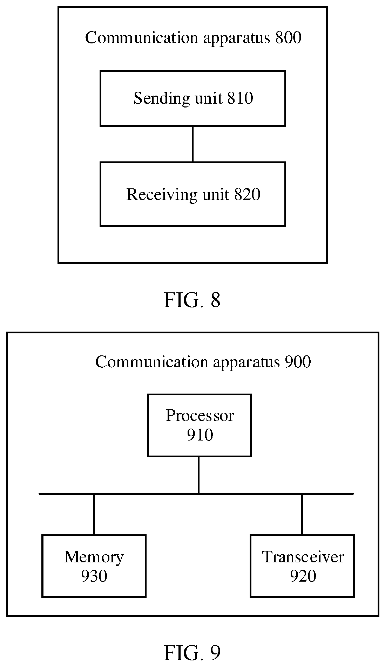

The foregoing describes in detail methods in embodiments of this application with reference to FIG. 1 to FIG. 7. The following describes in detail apparatuses in embodiments of this application with reference to FIG. 8 and FIG. 9.

FIG. 8 is a schematic block diagram of a communication apparatus 800 according to an embodiment of this application. The communication apparatus 800 may include a sending unit 810 and a receiving unit 820.

In a possible implementation, the communication apparatus 800 may perform steps performed by the access network device in the method 300, the method 400, or the method 500.

In another possible implementation, the communication apparatus 800 may perform steps performed by the terminal device in the method 300, the method 400, or the method 500. When the communication apparatus 800 performs the method 300 or the method 400, the communication apparatus 800 further includes a processing unit.

It should be understood that the communication apparatus 800 herein is embodied in a form of a functional unit. The term "unit" herein may be an application-specific integrated circuit (application-specific integrated circuit, ASIC), an electronic circuit, a processor (such as a shared processor, a dedicated processor, or a group processor) configured to execute one or more software or firmware programs, a memory, a merged logic circuit, and/or another appropriate component that supports the described function. **In** an optional example, a person skilled in the art may understand that the communication apparatus 800 may be specifically the access network device and the terminal device in the foregoing embodiments, and the communication apparatus 800 may be configured to perform procedures and/or steps corresponding to the access network device and the terminal device in the foregoing method embodiments. To avoid repetition, details are not described herein again.

The communication apparatus 800 in the foregoing solutions has functions of implementing corresponding steps performed by the access network device and the terminal device in the foregoing methods. The foregoing functions may be implemented by hardware, or may be implemented by hardware by executing corresponding software. The hardware or the software includes one or more modules corresponding to the foregoing functions.

**In** this embodiment of this application, the communication apparatus 800 in FIG. 8 may alternatively be a chip or a chip system, for example, a system on chip (system on chip, SoC).

FIG. 9 shows a schematic block diagram of another communication apparatus 900 according to an embodiment of this application. The communication apparatus 900 includes a processor 910, a transceiver 920, and a memory 930. The processor 910, the transceiver 920, and the memory 930 communicate with each other through an internal connection path. The memory 930 is configured to store instructions. The processor 910 is configured to execute the instructions stored in the memory 930, to control the transceiver 920 to send a signal and/or receive a signal.

It should be understood that the communication apparatus 900 may be specifically the access network device and the terminal device in the foregoing embodiments, and may be configured to perform steps and/or procedures corresponding to the access network device and the terminal device in the foregoing method embodiments. Optionally, the memory 930 may include a read-only memory and a random access memory, and may provide instructions and data for the processor. A part of the memory may further include a non-volatile random access memory. For example, the memory may further store information about a device type. The processor 910 may be configured to execute the instructions stored in the memory. When the processor 910 executes the instructions stored in the memory, the processor 910 is configured to perform steps and/or procedures corresponding to the access network device and the terminal device in the foregoing method embodiments. The transceiver 920 may include a transmitter and a receiver. The transmitter may be configured to implement steps and/or procedures that correspond to the transceiver and that are used to perform a sending action. The receiver may be configured to implement steps and/or procedures that correspond to the transceiver and that are used to perform a receiving action.

It should be understood that, in this embodiment of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

**In** an implementation process, steps in the foregoing methods may be implemented by using a hardware integrated logic circuit in the processor or by using instructions in a form of software. Steps of the methods disclosed with reference to embodiments of this application may be directly performed by a hardware processor, or may be performed by using a combination of hardware and a software unit in the processor. The software unit may be located in a mature storage medium in the art, such as a random access memory, a flash memory, a read-only memory, a programmable read-only memory, an electrically erasable programmable memory, or a register. The storage medium is located in the memory, and the processor reads the instructions in the memory and completes steps in the foregoing methods in combination with hardware of the processor. To avoid repetition, details are not described herein again.

An embodiment of this application further provides a communication system. The communication system may include the access network device and the terminal device in the foregoing embodiments.

An embodiment of this application provides a readable-computer storage medium. The readable-computer storage medium is configured to store a computer program, and the computer program is used to implement methods that correspond to the access network device and that are shown in the possible implementations in the foregoing embodiments.

An embodiment of this application provides another readable-computer storage medium. The readable-computer storage medium is configured to store a computer program, and the computer program is used to implement methods that correspond to the terminal device and that are shown in the possible implementations in the foregoing embodiments.

An embodiment of this application provides a computer program product. The computer program product includes a computer program (which may also be referred to as code or instructions), and when the computer program is run on a computer, the computer may perform methods that correspond to the access network device and that are shown in the foregoing embodiments.

An embodiment of this application provides another computer program product. The computer program product includes a computer program (which may also be referred to as code or instructions), and when the computer program is run on a computer, the computer may perform methods that correspond to the terminal device and that are shown in the possible implementations in the foregoing embodiments.

An embodiment of this application provides a chip system. The chip system is configured to support the foregoing access network device in implementing functions shown in embodiments of this application.

An embodiment of this application provides another chip system. The chip system is configured to support the foregoing terminal device in implementing functions shown in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, a receiver, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by an access network device, a first configuration message to a terminal device, wherein the first configuration message is used to configure a security algorithm for the terminal device;
sending, by the access network device, a second configuration message to the terminal device, wherein the second configuration message is used for radio resource control RRC reconfiguration, and the first configuration message and the second configuration message are sent in parallel;
receiving, by the access network device, a first configuration complete message from the terminal device, wherein the first configuration complete message indicates that the security algorithm has been configured; and
receiving, by the access network device, a second configuration complete message from the terminal device, wherein the second configuration complete message indicates that RRC reconfiguration is completed.

2. The method according to claim 1, wherein the first configuration message and the second configuration message occupy a same time-frequency resource.

3. The method according to claim 1 or 2, wherein the first configuration complete message and the second configuration complete message occupy a same time-frequency resource.

4. The method according to any one of claims 1 to 3, wherein before the sending, by the access network device, a second configuration message to the terminal device, the method further comprises:
sending, by the access network device, a query message to the terminal device, wherein the query message is used to query a capability of the terminal device, and the first configuration message, the query message, and the second configuration message are sent in parallel.

5. The method according to claim 4, wherein before the receiving, by the access network device, a second configuration complete message from the terminal device, the method further comprises:
receiving, by the access network device, capability information from the terminal device, wherein the capability information comprises the capability of the terminal device.

6. The method according to claim 4 or 5, wherein the first configuration message and the query message occupy a same time-frequency resource.

7. The method according to claim 5 or 6, wherein the first configuration complete message and the capability information occupy a same time-frequency resource.

8. A communication method, comprising:
sending, by an access network device, a first configuration message to a terminal device, wherein the first configuration message is used to configure a security algorithm for the terminal device;
sending, by the access network device, a query message to the terminal device, wherein the query message is used to query a capability of the terminal device, and the first configuration message and the query message are sent in parallel;
receiving, by the access network device, a first configuration complete message from the terminal device, wherein the first configuration complete message indicates that the security algorithm has been configured; and
receiving, by the access network device, capability information from the terminal device, wherein the capability information comprises the capability of the terminal device.

9. The method according to claim 8, wherein the method further comprises:
sending, by the access network device, a second configuration message to the terminal device, wherein the second configuration message is used for radio resource control RRC reconfiguration; and
receiving, by the access network device, a second configuration complete message from the terminal device, wherein the second configuration complete message indicates that RRC reconfiguration is completed.

10. The method according to claim 8 or 9, wherein the first configuration message and the query message occupy a same time-frequency resource.

11. The method according to any one of claims 8 to 10, wherein the first configuration complete message and the capability information occupy a same time-frequency resource.

12. A communication method, comprising:
sending, by an access network device, a first message to a terminal device, wherein the first message comprises a contention resolution identity;
sending, by the access network device, a second message to the terminal device, wherein the second message comprises a radio resource control RRC configuration message, the first message and the second message are sent in parallel, and the RRC configuration message is an RRC resume message or an RRC setup message;
receiving, by the access network device, a first feedback message from the terminal device, wherein the first feedback message indicates that the terminal device has received the first message; and
receiving, by the access network device, a second feedback message from the terminal device, wherein the second feedback message indicates that the terminal device has received the second message.

13. The method according to claim 12, wherein the first feedback message and the second feedback message occupy a same time-frequency resource.

14. The method according to claim 12 or 13, wherein the first message and the second message occupy a same time-frequency resource.

15. The method according to claim 12 or 13, wherein the second message is transmitted in fragments, the second message comprises M blocks of data, the M blocks of data are obtained by fragmenting the second message, N blocks of data in the M blocks of data and the first message occupy a same time-frequency resource, M is greater than N, M is an integer greater than 1, and N is an integer greater than or equal to 1.

16. A communication method, comprising:
receiving, by a terminal device, a first configuration message from an access network device, wherein the first configuration message is used to configure a security algorithm for the terminal device;
receiving, by the terminal device, a second configuration message from the access network device, wherein the second configuration message is used for radio resource control RRC reconfiguration, and the first configuration message and the second configuration message are received in parallel;
configuring, by the terminal device, the security algorithm based on the first configuration message;
after configuring the security algorithm, sending a first configuration complete message to the access network device, wherein the first configuration complete message indicates that the security algorithm has been configured;
performing, by the terminal device, RRC reconfiguration based on the second configuration message; and
after completing RRC reconfiguration, sending a second configuration complete message to the access network device, wherein the second configuration complete message indicates that RRC reconfiguration is completed.

17. The method according to claim 16, wherein the first configuration message and the second configuration message occupy a same time-frequency resource.

18. The method according to claim 16 or 17, wherein before the receiving, by the terminal device, a second configuration message from the access network device, the method further comprises:
receiving, by the terminal device, a query message from the access network device, wherein the query message is used to query a capability of the terminal device, and the first configuration message, the query message, and the second configuration message are received in parallel.

19. The method according to claim 18, wherein the method further comprises:
sending, by the terminal device, capability information to the access network device based on the query message, wherein the capability information comprises the capability of the terminal device.

20. The method according to claim 18 or 19, wherein the first configuration message and the query message occupy a same time-frequency resource.

21. A communication method, comprising:
receiving, by a terminal device, a first configuration message from an access network device, wherein the first configuration message is used to configure a security algorithm for the terminal device;
receiving, by the terminal device, a query message from the access network device, wherein the query message is used to query a capability of the terminal device, and the first configuration message and the query message are received in parallel;
configuring, by the terminal device, the security algorithm based on the first configuration message;
after configuring the security algorithm, sending a first configuration complete message to the access network device, wherein the first configuration complete message indicates that the security algorithm has been configured; and
sending, by the terminal device, capability information to the access network device based on the query message, wherein the capability information comprises the capability of the terminal device.

22. The method according to claim 21, wherein the method further comprises:
receiving, by the terminal device, a second configuration message from the access network device, wherein the second configuration message is used for radio resource control RRC reconfiguration;
performing, by the terminal device, RRC reconfiguration based on the second configuration message; and
after completing RRC reconfiguration, sending a second configuration complete message to the access network device, wherein the second configuration complete message indicates that RRC reconfiguration is completed.

23. The method according to claim 21 or 22, wherein the first configuration message and the query message occupy a same time-frequency resource.

24. A communication method, comprising:
receiving, by a terminal device, a first message from an access network device, wherein the first message comprises a contention resolution identity;
receiving, by the terminal device, a second message from the access network device, wherein the second message comprises a radio resource control RRC configuration message, the first message and the second message are received in parallel, and the RRC configuration message is an RRC resume message or an RRC setup message;
sending, by the terminal device, a first feedback message to the access network device, wherein the first feedback message indicates that the terminal device receives no first message or has received the first message; and
sending, by the terminal device, a second feedback message to the access network device, wherein the second feedback message indicates that the terminal device receives no first message or has received the second message.

25. The method according to claim 24, wherein the first message and the second message occupy a same time-frequency resource.

26. The method according to claim 24 or 25, wherein the second message is transmitted in fragments, the second message comprises M blocks of data, the M blocks of data are obtained by fragmenting the second message, N blocks of data in the M blocks of data and the first message occupy a same time-frequency resource, M is greater than N, M is an integer greater than 1, and N is an integer greater than or equal to 1.

27. A communication apparatus, comprising a processor and a memory, wherein the memory is configured to store a computer program or instructions, and the processor is configured to run the computer program or the instructions, to perform the method according to any one of claims 1 to 7, the method according to any one of claims 8 to 11, the method according to any one of claims 12 to 15, the method according to any one of claims 16 to 20, the method according to any one of claims 21 to 23, or the method according to any one of claims 24 to 26.

28. A computer-readable storage medium, wherein the computer-readable storage medium stores a computer program or instructions, and the computer program or the instructions are used to implement the method according to any one of claims 1 to 7, the method according to any one of claims 8 to 11, the method according to any one of claims 12 to 15, the method according to any one of claims 16 to 20, the method according to any one of claims 21 to 23, or the method according to any one of claims 24 to 26.

29. A computer program product, wherein the computer program product comprises instructions, and when the instructions are executed, the method according to any one of claims 1 to 7, the method according to any one of claims 8 to 11, the method according to any one of claims 12 to 15, the method according to any one of claims 16 to 20, the method according to any one of claims 21 to 23, or the method according to any one of claims 24 to 26 is performed.
